**Europäisches Patentamt**

**European Patent Office**

**Office européen des brevets**

(11) Numéro de publication: **0 060 152**

**A1**

# DEMANDE DE BREVET EUROPEEN

(21) Numéro de dépôt: **82400180.4**

(22) Date de dépôt: **04.02.82**

(51) Int. Cl.³: **C 04 B 7/44**

(30) Priorité: **06.03.81 FR 8104475**

(43) Date de publication de la demande:
**15.09.82 Bulletin 82/37**

(84) Etats contractants désignés:
**AT BE CH DE GB IT LI LU NL SE**

(71) Demandeur: **FIVES-CAIL BABCOCK, Société anonyme
7 rue Montalivet
F-75383 Paris Cedex 08(FR)**

(72) Inventeur: **Henin, Jean-Pierre
14, rue de la Concorde
F-59110 La Madeleine(FR)**

(72) Inventeur: **Ghestem, Gérard
185, rue Clémenceau
F-59211 Santes(FR)**

(74) Mandataire: **Fontanié, Etienne
FIVES-CAIL BABCOCK 7, rue Montalivet
F-75383 Paris Cedex 08(FR)**

(54) Procédé et installation pour la production du clinker du ciment par voie sèche.

㊼ L'invention concerne la production du clinker de ciment par voie sèche dans un four tubulaire rotatif avec préchauffage des matières premières, finement broyées, dans un échangeur placé en tête du four, par mise en suspension dans les fumées du four.

Pour limiter la formation de concrétions dans la boîte à fumées (12) du four (10) et dans la gaine (14) la reliant à l'échangeur, une fraction des matières premières froides est injectée pneumatiquement dans l'extrémité amont du four, approximativement parallèlement à l'axe de ce dernier et à contre-courant des fumées qui en sortent, de façon à former à cette extrémité du four un nuage de poussières (32) occupant pratiquement toute sa section.

EP 0 060 152 A1

./...

Procédé et installation pour la production du clinker du ciment par voie sèche

La présente invention concerne les installations pour la production du clinker de ciment par voie sèche comportant un four tubulaire rotatif et un échangeur de tête où les matières premières, finement broyées, sont chauffées et partiellement décarbonatées par mise en suspension dans les fumées du four.

Dans ces installations, la formation de concrétions dans la boîte à fumées et dans la gaine reliant celle-ci au dernier étage de l'échangeur constitue un obstacle important au bon fonctionnement. En effet, sur ces parties fixes de l'installation, les concrétions se développent librement, sans être soumises à aucun effort mécanique et des arrêts fréquents sont nécessaires pour les éliminer. Ces concrétions peuvent être la conséquence de phénomènes divers et les mécanismes qui les provoquent peuvent être sensiblement différents selon leur nature. En simplifiant, on peut considérer que la plupart des concrétions sont dues, soit à la solidification des produits volatils, essentiellement des chlorures alcalins, provenant des matières premières et contenus dans les fumées, soit au durcissement de matières déposées sur les parois par sulfatation ou formation d'autres composés sous l'action du gaz sulfurique ou du gaz sulfureux présents dans les fumées.

Ces concrétions se produisent généralement dans les zones de contact direct entre les fumées du four à température relativement élevée, par exemple de l'ordre de 1000° C à 1100°C, et les matières solides à température sensiblement plus faible, par exemple de l'ordre de 600°C à 800°C. Leur formation est favorisée par une atmosphère réductrice avec présence de sulfures au lieu de sulfates ou de sulfites.

Deux solutions sont utilisées pour lutter contre ce phénomène : le moyen le plus simple consiste à ajuster la composition des matières premières de façon qu'un certain nombre de conditions favorables soient rassemblées. Ces conditions sont essentiellement une teneur assez faible en ions $Cl^-$, une teneur assez faible en substances alcalines, un rapport favorable entre les teneurs en soufre et substances alcalines. En pratique, il est souvent difficile de respecter ces conditions, l'exploitant n'yant pas, en général, la possibilité de modifier la composition du cru à volonté.

La seconde solution, plus couramment utilisée, consiste à limiter le taux des produits volatils et des sulfates dans le four, en prélevant une partie des fumées à la sortie du four et en les rejetant directement à l'atmosphère. Cette solution présente l'inconvénient de nécessiter une mise en oeuvre très coûteuse, et d'entraîner un supplément non négligeable de consommation de combustible et de matières premières. Par ailleurs, elle est surtout efficace pour les concrétions alcalines ou chlorées, mais beaucoup moins pour les concrétions provoquées par un excès de gaz sulfurique.

Le but de la présente invention est d'apporter à ce problème une solution originale particulièrement efficace pour lutter contre les concrétions d'origine sulfatée et n'entraînant qu'une réduction très faible du rendement thermique.

Le procédé objet de l'invention est caractérisé par le fait qu'on injecte pneumatiquement une fraction des matières premières froides, finement broyées, dans l'extrémité amont, en considérant le sens de circulation des matières solides, du four, de préférence parallèlement à l'axe de ce dernier et à contre-courant des fumées qui en sortent, de façon à former dans la partie terminale du four un nuage dense de poussières occupant pratiquement toute sa section.

Des matières premières froides peuvent aussi être injectées dans la boîte·à fumées, par le haut, de préférence près de l'extrémité amont du four, pour créer un nuage de poussières dans la boîte à fumées.

Le débit des matières premières injectées dans le four et éventuellement dans la boîte à fumées représente entre 1 % et 10 % du débit total traité dans l'installation.

La vitesse du gaz porteur utilisé pour l'injection des matières premières est égale ou supérieure à 40 mètres par seconde.

Le gaz utilisé peut être de l'air ou des fumées prélevées à la sortie de l'échangeur.

Lorsque les fumées entrent en contact avec les matières premières froides, les substances volatiles qu'elles contiennent se déposent sur les particules de matière ou réagissent sur elles. Une fraction des particules chargées de ces produits tombent dans le four et l'autre partie est entraînée par les fumées dans la boîte à fumées puis dans la gaine reliant le four au préchauffeur et, après passage dans le dernier étage de l'échangeur, est réintroduite dans le four avec les matières premières ayant traversé l'échangeur. Le fait qu'une partie des particules chargées des produits nuisibles tombe dans le four permet de limiter la circulation d'une fraction de ces produits au four lui-même et, par conséquent, de diminuer le taux de ces produits circulant dans la boîte à fumées.

L'échange de chaleur entre les fumées et les matières premières froides en suspension dans la partie terminale du four est très efficace et la température des fumées dans cette zone est réduite, ce qui est un facteur favorable pour que les risques de formation de concrétions dans la boîte à fumées soient sensiblement diminués. Certaines particules chargées de produits formateurs de concrétions viennent au contact des parois de la boîte à fumées et de la gaine sur leur trajet entre le four et l'échangeur, mais le risque que ces particules forment des concrétions en restant collées à la paroi est bien moindre que lorsque les dits produits se déposent directement sur les parois.

Pour la mise en oeuvre de l'invention on utilise une buse d'injection pneumatique placée approximativement parallèlement à l'axe du four, sur la paroi de la boîte à fumées faisant face à l'entrée du four. Cette buse est alimentée en gaz sous pression (air ou fumées) par un ventilateur ou un compresseur et en matières premières par un dispositif de dosage permettant de régler le débit des matières injectées. Celles-ci sont prélevées sur l'alimentation de l'échangeur de tête, par exemple sur la trémie peseuse.

Une seconde buse d'injection peut être placée sur le plafond de la boîte à fumées, près de l'extrémité du four ou dans la partie supérieure du joint entre la boîte à fumées et le four, cette buse étant dirigée vers le bas pour former un rideau de poussières devant l'entrée du four.

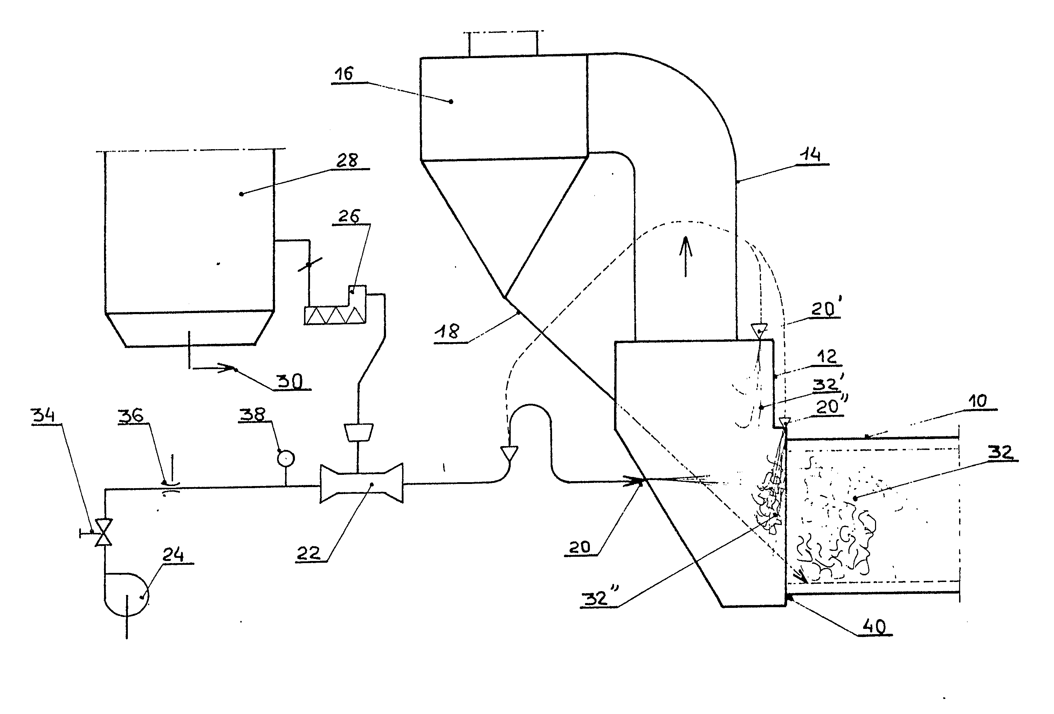

D'autres caractéristiques de l'invention apparaîtront à la lecture de la description qui suit et se réfère au dessin l'accompagnant qui montre, à titre d'exemple non limitatif, un mode de réalisation de l'invention.

L'unique figure de ce dessin est un schéma montrant une partie d'une installation de production de ciment par voie sèche réalisée conformément à l'invention.

Cette installation comporte un four tubulaire rotatif 10 dont l'extrémité amont, par où les matières à traiter sont introduites dans le four, est raccordée à une boîte à fumées 12. Un joint 40 permet la rotation du four tout en empêchant l'entrée d'air froid.

La boîte à fumées 12 est raccordée par une gaine 14 à l'entrée d'un cyclone 16 constituant le dernier étage d'un échangeur à cyclones de construction classique. De la pointe de ce cyclone part un tuyau 18 qui pénètre dans le four à travers la boîte à fumées.

Sur la paroi de la boîte à fumées faisant face à l'entrée du four est montée une buse d'injection 20 qui est disposée approximativement parallèlement à l'axe du four. Cette buse est reliée à une chambre de mélange 22 où des matières premières finement broyées sont dispersées dans un courant de gaz porteur fourni par un ventilateur ou un compresseur 24.

Les matières premières sont prélevées au moyen d'un dispositif de dosage 26 sur une trémie peseuse 28 dont la sortie principale 30 est reliée au premier étage de l'échangeur à cyclones.

Une seconde buse d'injection peut être placée en 20' sur le plafond de la boîte à fumées 12, près de l'extrémité amont du four, ou à la partie supérieure du joint 40, en 20". Cette buse sera dirigée vers le bas et reliée à la chambre 22.

En fonctionnement, la majeure partie des matières premières, dont le débit total est réglé au moyen de la trémie peseuse 28, est introduite dans l'échangeur à cyclones où elle est chauffée et au moins partiellement décarbonatée au moyen des fumées du four. Les matières sortant du cyclone 16, constituant le dernier étage de l'échangeur, sont introduites dans le four par le tuyau 18. Elles se déplacent ensuite jusqu'à l'autre extrémité du four, sous l'action combinée de la gravité et de la rotation du four, et sur tout leur trajet elles sont mises en contact avec des gaz chauds produits par un brûleur placé à cette autre extrémité et circulant en sens inverse. La chaleur cédée par ces fumées permet de compléter, si nécessaire, la décarbonatation et d'effectuer la clinkerisation.

Au moyen de la buse d'injection 20, on introduit dans la boîte à fumées et dans l'extrémité adjacente du four des fines particules de matières premières froides en suspension dans un courant de gaz porteur de façon à former un nuage de poussières, représenté schématiquement en 32, qui occupe pratiquement toute la section du four. La profondeur de pénétration du nuage dans le four dépend notamment de la vitesse des fumées et de la vitesse du gaz porteur à la sortie de la buse. Cette dernière vitesse ne devra pas être inférieure à 40 m/s.

Dans le four, les particules sont freinées par les fumées et leur vitesse s'annule rapidement. A ce moment-là, certaines particules tombent dans le four, sur le talus de matières ; les autres particules sont entraînées par les fumées dans le cyclone 16, où elles se mélangent aux matières provenant des étages supérieurs de l'échangeur, puis sont renvoyées avec celles-ci dans le four.

On a représenté en 32' et 32" les nuages de poussières qui seraient formés par les injecteurs 20' et 20".

L'installation est en outre équipée de moyens 34, 36, 38 de contrôle et de réglage du débit et de la pression du courant de gaz porteur. Ces moyens et le dispositif de dosage 26 permettent de régler les débits de gaz et de matières premières injectés dans la boîte à fumées aux valeurs minimales nécessaires pour empêcher la formation de concrétions de façon à réduire les pertes thermiques au strict minimum.

Il est bien entendu que toutes les modifications apportées au mode de réalisation décrit par l'emploi de moyens techniques équivalents entrent dans le cadre de l'invention.

Revendications

1. Procédé de production du clinker de ciment par voie sèche suivant lequel les matières premières froides finement broyées sont mises en suspension dans les fumées d'un four tubulaire rotatif (10) pour être chauffées et au moins partiellement décarbonatées avant d'être introduites dans ledit four, caractérisé par le fait qu'une fraction des matières premières froides, finement broyées, est injectée pneumatiquement dans l'extrémité amont, en considérant le sens de circulation des matières solides, du four, approximativement parallèlement à l'axe de ce dernier et à contre-courant des fumées sortant du four, de façon à former à cette extrémité du four un nuage de poussières (32) occupant pratiquement toute sa section.

2. Procédé selon la revendication 1, caractérisé par le fait que des matières premières froides sont aussi injectées approximativement verticalement et de haut en bas dans la boîte fumées (12) du four, près de l'extrémité adjacente de ce dernier, ou dans le joint (40) entre le four et la boîte à fumées.

3. Procédé selon la revendication 1 ou 2, caractérisé par le fait que le débit des matières premières froides injectées dans le four et éventuellement dans la boîte à fumées représente entre 1 % et 10 % du débit total des matières premières traitées, le débit restant alimentant l'échangeur de chaleur où les matières premières sont mises en suspension dans les fumées du four.

4. Procédé selon la revendication 1, 2 ou 3, caractérisé en ce que la vitesse du gaz porteur utilisé pour l'injection des matières premières est au moins égale à 40 mètres par seconde.

5. Procédé selon l'une quelconque des revendications précédentes, caractérisé en ce que le gaz porteur utilisé pour l'injection des matières premières est de l'air.

6. Procédé selon l'une quelconque des revendications précédentes, caractérisé en ce qu'on utilise comme gaz porteur pour l'injection des matières premières une fraction des fumées du four refroidies.

7. Installation pour la mise en oeuvre du procédé selon l'une quelconque des revendications 1 à 6, comportant un four tubulaire rotatif (10) dont l'extrémité amont est raccordée à une boîte à fumées (12), un échangeur de chaleur à plusieurs étages et une gaine (14) reliant la boîte à fumées au dernier étage (16) de l'échangeur, caractérisée en ce qu'elle comporte en outre une buse d'injection pneumatique (20) placée approximativement parallèlement à l'axe du four (10), sur la paroi de la boîte à fumées (12) faisant face à l'entrée du four.

8. Installation selon la revendication 7, caractérisée en ce qu'elle comporte une seconde buse d'injection (20') placée sur le plafond de la boîte à fumées (12), près de l'extrémité du four (10) et dirigée vers le bas.

9. Installation selon la revendication 7, caractérisée en ce qu'elle comporte une autre buse d'injection (20") placée à la partie supérieure du joint (40) entre le four (10) et la boîte à fumées (12) et dirigée vers le bas.

10. Installation selon la revendication 7, 8 ou 9, caractérisée en ce qu'elle comporte des moyens de réglage (34, 26) des débits d'alimentation en gaz et en matières premières de la ou des buses d'injection (20, 20', 20").

Office européen
des brevets

**RAPPORT DE RECHERCHE EUROPEENNE**

EP 82 40 0180

| CLASSEMENT DE LA DEMANDE (Int. Cl. 3) |
|---|
| C 04 B 7/44 |

## DOCUMENTS CONSIDERES COMME PERTINENTS

| Catégorie | Citation du document avec indication, en cas de besoin, des parties pertinentes | Revendication concernée |
|---|---|---|
| Y | RESEARCH DISCLOSURE, no. 186, octobre 1979 no. 18613, page 549 "Alkali removal with filter dust" * en entier * | 1,2,3 |
| | --- | |
| Y | GB - A - 1 451 057 (PORTLAND CEMENT) * page 5, lignes 12-23 * | 1,7 |
| | --- | |
| A | DE - A - 2 552 088 (KLÖCKNER-HUMBOLD DEUTZ AG) * revendication 1 * | 1,7 |
| | --- | |
| A | FR - A - 1 118 388 (F.L. SMIDTH & CIE) * page 2, colonne de droite, paragraphe 2 * | 1,7 |
| | --------- | |

| DOMAINES TECHNIQUES RECHERCHES (Int. Cl. 3) |
|---|
| C 04 B F 27 B |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| | Le présent rapport de recherche a été établi pour toutes les revendications |
|---|---|

| Lieu de la recherche | Date d'achèvement de la recherche | Examinateur |
|---|---|---|
| La Haye | 23-03-1982 | STANGE |

OEB Form 1503.1  06.78